(19) Europäisches Patentamt
European Patent Office
Office européen des brevets

(11) **EP 3 764 306 A1**

(12) **EUROPEAN PATENT APPLICATION**

(43) Date of publication:
**13.01.2021 Bulletin 2021/02**

(51) Int Cl.:
***G06Q 30/06*** *(2012.01)*

(21) Application number: **20171514.1**

(22) Date of filing: **27.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.07.2019 JP 2019128477**

(71) Applicant: **TOYOTA JIDOSHA KABUSHIKI
KAISHA**
**Toyota-shi**
**Aichi-ken 471-8571 (JP)**

(72) Inventors:
• **SUZUKI, Keiko**
  **Aichi-ken, 471-8571 (JP)**
• **HAGIYA, Toshiyuki**
  **Aichi-ken, 471-8571 (JP)**
• **TOKUDA, Masatoshi**
  **Aichi-ken, 471-8571 (JP)**

(74) Representative: **J A Kemp LLP**
**14 South Square**
**Gray's Inn**
**London WC1R 5JJ (GB)**

(54) **INFORMATION DETERMINATION DEVICE AND INFORMATION DETERMINATION METHOD**

(57) An information determination device includes an occupant identification unit (32) configured to identify a plurality of occupants in a vehicle, a group specification unit (34) configured to specify, based on an identification result of the occupants, a group composed of the occupants, a storage unit (36) configured to store group behavior information of the group and individual behavior information of the occupants, a derivation unit (38) configured to derive group preference information based on the individual behavior information of the occupants identified by the occupant identification unit and the group behavior information of the group composed by the occupants, and a determination unit (40) configured to determine, based on the group preference information that is derived, suggestion information to be provided to the occupants.

FIG. 2

**Description**

BACKGROUND OF THE INVENTION

1. Field of the Invention

The invention relates to an information determination device and an information determination method.

2. Description of Related Art

Japanese Unexamined Patent Application Publication No. 2013-131009 (JP 2013-131009 A) discloses an information provision system that provides information depending on preferences of individual members constituting a group. Upon receiving a search request from a terminal of a user, the information provision system specifies a preference of the user based on past browsing history of each user and group, calculates a degree of influence for each user constituting the group, calculates a weighted sum from the degrees of influence, and specifies a recommendation order of the preference of the group. The information provision system extracts information in accordance with the specified recommendation order and transmits the extracted information to the terminal of the user to provide information matching the preferences of the user and the group. Information on the group and each user belonging to the group is designated by and acquired from the user via the terminal of the user.

SUMMARY OF THE INVENTION

In the technique disclosed in JP 2013-131009 A, the information on the group and each user belonging to the group is acquired by user's designation. Thus, when a composition of the users in the group changes, there is a possibility that the composition of the users cannot be specified and an appropriate recommendation order cannot be specified.
The invention provides an information determination device and an information determination method capable of outputting appropriate information in accordance with a composition of occupants in a group.
A first aspect of the invention relates to an information determination device. The information determination device includes an occupant identification unit configured to identify a plurality of occupants in a vehicle, a group specification unit configured to specify, based on an identification result of the occupants, a group composed of the occupants, a storage unit configured to store group behavior information of the group and individual behavior information of the occupants, a derivation unit configured to derive group preference information based on the individual behavior information of the occupants identified by the occupant identification unit and the group behavior information of the group composed by the occupants, and a determination unit configured to determine, based on the group preference information that is derived, suggestion information to be provided to the occupants.
In the information determination device according to the first aspect, the storage unit may be configured to store group configuration information in which identification information of the occupants is associated with identification information of the group. The group specification unit may be configured to include, in the group, an occupant that is not included in the group configuration information when a predetermined adding condition is satisfied.
In the information determination device according to the first aspect, the derivation unit may be configured to derive a degree of influence of each occupant in the group by comparing the group behavior information and the individual behavior information, and may be configured to derive the group preference information based on the degree of influence of each occupant that is derived and the individual behavior information of each occupant. When the group specification unit includes, in the group, another occupant that is not included in the group configuration information, the derivation unit may be configured to derive a degree of influence of the other occupant based on the degree of influence of the other occupant in another group.
In the information determination device according to the first aspect, the storage unit may be configured to store the group behavior information when behaving in a group and individual behavior information of the occupant, the individual behavior information not including behavior information when behaving in a group.
In the information determining device according to the first aspect, the determination unit may be configured to extract a similar group having the group behavior information or preference information similar to the group preference information that is derived and determine the suggestion information based on the group behavior information of the similar group that is extracted.
A second aspect of the invention relates to an information determination method. An information determination method includes identifying a plurality of occupants in a vehicle, specifying, based on an identification result of the occupants, a group composed of the occupants, storing group behavior information of the group and individual behavior information of the occupants, deriving group preference information based on the individual behavior information of the occupants who are identified and the group behavior information of the group composed of the occupants, and determining, based on the group preference information that is derived, suggestion information to be provided to the occupants.

According to the invention, it is possible to provide an information determination device and an information determination method capable of outputting appropriate information in accordance with a composition of occupants in a group.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a table showing an output result using an information determination system according to an embodiment;
FIG. 2 is a diagram showing a functional configuration of the information determination system;
FIG. 3 is a table showing preference information on occupants and a group; and
FIG. 4 is a flowchart showing a process for determining output of suggestion information.

DETAILED DESCRIPTION OF EMBODIMENTS

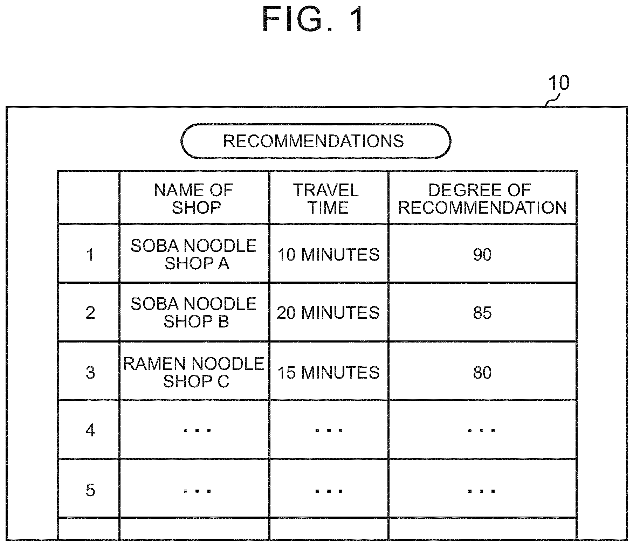

FIG. 1 is a table showing an output result using an information determination system according to an embodiment. The information determination system according to the embodiment determines suggestion information to be provided to an occupant of a vehicle, and outputs the determined suggestion information from an output unit 10. FIG. 1 shows an example in which an in-vehicle display serves as the output unit 10 and displays an image. However, the invention is not limited to this. For example, the output unit 10 may be a speaker and may output the suggestion information by voice.

The suggestion information shown in FIG. 1 is displayed in the order of "soba noodle shop A", "soba noodle shop B", and "ramen noodle shop C", along with a travel time from a vehicle position to the shop and a degree of recommendation to the occupants, and are displayed in descending order of the degree of recommendation. The suggestion information may be output in response to a request for the suggestion information from the occupant, or may be output when a detection result of an in-vehicle camera or the like satisfies a predetermined output condition.

The degree of recommendation serving as a reference when outputting the suggestion information is derived based on behavior information of each occupant in the vehicle and behavior information of the group composed of each occupant. The information determination system identifies each occupant in the vehicle based on the detection results of the in-vehicle camera and an in-vehicle microphone, and specifies a group composed of the identified occupants.

The behavior information of each occupant is derived based on a behavior history when the occupant behaves individually, and the behavior information of the group is derived based on a behavior history when the occupants behave in a group. The information determination system collects the behavior histories of the occupants and the group to generate the behavior information on the occupants and the group.

Since the suggestion information is output using the behavior information of each occupant in addition to the behavior information of the group, the suggestion information appropriately incorporating a preference of each occupant can be output. Further, by identifying each occupant to specify the group, the behavior history of the group can be acquired with high accuracy even when a composition of the occupants in the group changes.

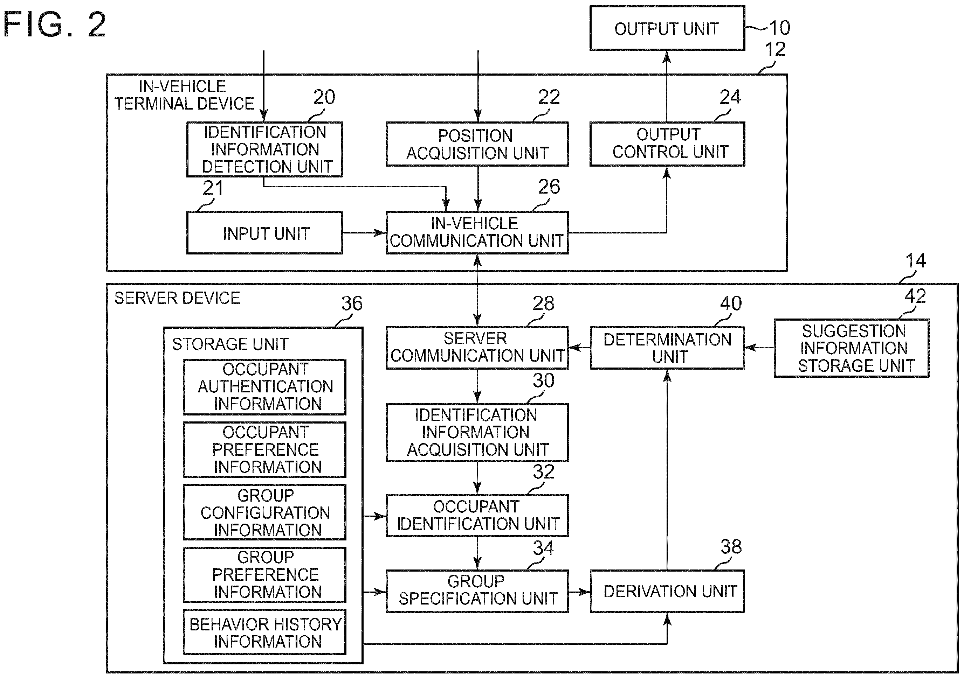

FIG. 2 is a diagram showing a functional configuration of an information determination system 1. In FIG. 2, each element indicated as a functional block that performs various processes can be configured by a circuit block, a memory, or other large-scale integration (LSI) circuits in terms of hardware, and can be realized by a program or the like loaded into the memory in terms of software. Therefore, it is understood by those skilled in the art that these functional blocks can be realized in various forms solely by hardware, solely by software, or by a combination thereof, and the invention is not limited to any of the above.

The information determination system 1 includes an in-vehicle terminal device 12 and a server device 14. The in-vehicle terminal device 12 is provided in the vehicle, and is connected to the server device 14 via a network. The server device 14 is provided in a data center or the like. The number of the server device 14 is not limited to one, and the server device 14 may be composed of a combination of devices. The server device 14 functions as an information determination device that determines an output of suggestion information.

The in-vehicle terminal device 12 includes an identification information detection unit 20, an input unit 21, a position acquisition unit 22, an output control unit 24, and an in-vehicle communication unit 26. The server device 14 includes a server communication unit 28, an identification information acquisition unit 30, an occupant identification unit 32, a group specification unit 34, a storage unit 36, a derivation unit 38, a determination unit 40, and a suggestion information storage unit 42.

The identification information detection unit 20 of the in-vehicle terminal device 12 detects identification information of an occupant. The identification information detection unit 20 may be, for example, at least one of a camera that captures an image of a vehicle interior, a microphone that detects a sound of the vehicle interior, a short-range wireless communication device, and the like. For example, the camera detects the occupant's face image, and the microphone detects the occupant's voice. These pieces of the identification information are used for body authentication such as face authentication and voice print authentication. Further, the short-range wireless communication device may receive an individual identification number of the occupant from a mobile terminal device possessed by the occupant.

The input unit 21 receives an operation input from the occupant, and receives, for example, an input requesting suggestion information. The input unit 21 may be a touch panel that allows input by the occupant, or the microphone that detects the sound of the vehicle interior including the occupant's voice.

The position acquisition unit 22 acquires position information of the vehicle and an acquisition time of the position information using the Global Positioning System (GPS). The position information of the vehicle and the acquisition time are transmitted to the server device 14 via the in-vehicle communication unit 26.

The output control unit 24 controls the output unit 10 such that the output unit 10 outputs suggestion information as shown in FIG. 1. The in-vehicle communication unit 26 transmits the position information of the vehicle and the identification information of the occupant to the server communication unit 28 of the server device 14, and receives the suggestion information from the server communication unit 28. The vehicle communication unit 26 may transmit the identification information of the occupant to the server device 14 at a timing when a door of the vehicle is closed or at a timing when an ignition is turned on so that the server device 14 identifies the occupant to specify the group.

The storage unit 36 of the server device 14 stores occupant authentication information for authenticating the occupant, occupant preference information, group configuration information, group preference information, and behavior history information. The occupant authentication information is used for collating with the identification information detected by the in-vehicle terminal device 12, and is stored in association with an occupant identification (ID). The occupant authentication information is, for example, a face image, a voiceprint, a personal identification number, and the like of the occupant. Further, the storage unit 36 may store individual attribute information such as gender and age of the occupant as the occupant authentication information.

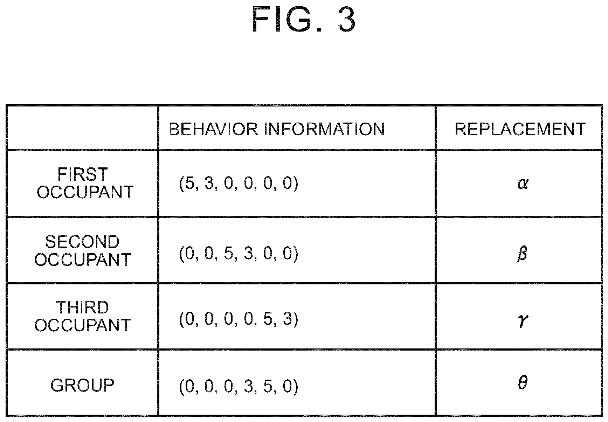

The group configuration information includes the occupant IDs of a plurality of occupants in association with a group ID. The group is composed of occupants in the vehicle and occupants who have behaved together in the past. The group configuration information may be registered by an occupant's input. The behavior information of the occupant and the group will be described with reference to FIG. 3.

FIG. 3 is a table showing the behavior information on the occupants and the group. The individual behavior information of the occupant is generated based on the behavior history of the occupant such that the larger the number of visits and/or the percentage of visits to facilities of the same category is, the larger a numerical value of the category is. The facilities are classified by category, and it is possible to grasp what category facilities have been visited by the occupant from the behavior history of the occupant. In FIG. 3, the behavior information is composed of six categories, but the number of the categories is not limited to this number.

The individual behavior information of a first occupant shown in FIG. 3 is represented by a vector, and each component of the vector indicates a frequency of visiting each category facility such as "soba noodle shop" or "ramen noodle shop". The larger the numerical value of the component of the individual behavior information is, the more frequently the occupant has visited the category facility. The individual behavior information of the first occupant indicates that, from left to right, namely, from a first component to a sixth component, the first occupant has visited the category facility of the first component most frequently, followed by the category facility of the second component. Considering that a high frequency of visits represents the occupant's preference, the individual behavior information of the occupant may be regarded as an individual preference vector indicating the occupant's preference.

The individual behavior information of a second occupant indicates that the second occupant has visited the category facility of the third component most frequently, followed by the category facility of the fourth component. The individual behavior information of the third occupant indicates that the third occupant has visited the category facility of the fifth component most frequently, followed by the category facility of the sixth component. Since an individual preference of the occupant is not always incorporated when behaving in a group, the individual behavior information of the occupant does not include the behavior history when behaving in a group, and is generated based only on the behavior history when behaving individually. The individual behavior information of the occupant does not include the behavior history when behaving in a group, and thus has high reliability as an index indicating the individual preference of the occupant.

Group behavior information of the group is generated based on the behavior history when behaving together with a plurality of occupants, and FIG. 3 indicates that the group has visited the category facility of the fifth component most frequently, followed by the category facility of the fourth component.

Descriptions will be given returning to FIG. 2. The behavior history information stored in the storage unit 36 is associated with the occupant ID or the group ID. The behavior history of the occupant may be generated using the position information of a mobile terminal of the occupant in addition to the position information of the vehicle when the occupant drives the vehicle individually. The facility that has been visited by the occupant is extracted based on the position information of the occupant and a duration for which the occupant has stayed at the facility indicated by the position information, and information on the visited facility is stored as the behavior history information. The behavior history of the group is generated based on the position information of the vehicle.

The behavior history information of the group may be generated based on the position information of the mobile terminal of the occupant in addition to the position information of the vehicle. For example, when all the members of a group get off the vehicle and all the members of the same group get on the vehicle again, the behavior history information of the group during a time after the members get off the vehicle until the members get on the vehicle again is generated based on the position information of the mobile terminals of the members. Alternatively, the behavior history information of the group may be generated using facility information set in a navigation device of the vehicle.

The identification information acquisition unit 30 receives, from the in-vehicle terminal device 12, identification information of each occupant in the vehicle via the server communication unit 28. The occupant identification unit 32 collates the identification information of the occupants transmitted from the in-vehicle terminal device 12 with the occupant authentication information stored in the storage unit 36 to identify the occupants and specify the occupant IDs of the occupants. Thereby, all the occupants in the vehicle are specified.

When an occupant whose authentication information is not stored in the storage unit 36 gets on the vehicle, the occupant identification unit 32 determines that the unidentifiable occupant is a new occupant, assigns a new occupant ID, and outputs the acquired occupant identification information to the storage unit 36 such that the storage unit 36 stores the occupant identification information as the authentication information.

The group specification unit 34 specifies a group including occupants based on the identification result of the occupants. The group specification unit 34 refers to the group configuration information stored in the storage unit 36 and specifies a group that matches the occupant IDs identified by the occupant identification unit 32.

When specifying the group, the group specification unit 34 may require that the occupants completely match or that the occupants partially match. For example, when the occupant IDs identified by the occupant identification unit 32 include all of the occupant IDs included in the group configuration information, the group specification unit 34 may determine that the group is the group indicated by the group configuration information. In other words, even when the occupant IDs included in the group configuration information and the occupant IDs identified by the occupant identification unit 32 do not completely match, as long as a predetermined allowable condition is satisfied, the group specification unit 34 determines that the group matches the group indicated by the group configuration information, and derives a group ID corresponding to the occupant IDs identified by the occupant identification unit 32.

The predetermined allowable condition may be, for example, that the occupant IDs included in the group configuration information and the occupant IDs identified by the occupant identification unit 32 match at a predetermined ratio or more, for example, 75% or more. When there is no group that satisfies the predetermined allowable condition, the group specification unit 34 adds a new group ID to the combination of the occupants, and adds the new group ID to the group configuration information of the storage unit 36.

Even when the occupant IDs included in the group configuration information and the occupant IDs identified by the occupant identification unit 32 match at the predetermined ratio or more, the group specification unit 34 may vary the group specification results depending on a gender ratio and/or whether there are children. Group preferences may vary significantly between groups composed only of men or only of women and groups composed of both men and women, and the group preferences may vary significantly depending on whether there are children in the group. Therefore, when there is a difference in the gender ratio or whether there are children even when the occupant IDs included in the group configuration information and the occupant IDs identified by the occupant identification unit 32 match at the predetermined ratio or more, the group is determined to be a different group. The gender ratio of the group and whether there are children in the group can be grasped based on the individual attribute information (occupant authentication information) of the occupants. As described above, the predetermined allowable condition is determined by a matching ratio between the occupant IDs in the group configuration information and the occupant IDs identified by the occupant identification unit 32, as well as the individual attribute information (occupant authentication information) of the occupants. By providing an allowable condition for specifying the group, the group behavior information of the group stored in the storage unit 36 can be used effectively.

When all the occupants indicated in the group configuration information are present, the group specification unit 34 may include another occupant not included in the group configuration information in the group. That is, the group specification unit 34 may include another occupant in the group configuration information if a predetermined adding condition is satisfied. The predetermined adding condition may be that the occupant IDs included in the group configuration information and the occupant IDs identified by the occupant identification unit 32 match at a predetermined ratio or more, for example, 75% or more.

The derivation unit 38 derives group preference information depending on the occupants in the vehicle, based on the group behavior information of the group and the individual behavior information of the occupants. The derivation unit 38 compares the group behavior information of the group with the individual behavior information of the occupants to derive a degree of influence of each of the occupants in the group, and derives the group preference information based on the derived degree of influence of each occupant and the individual behavior information of each occupant.

The derivation unit 38 sums up the individual behavior information of each occupant depending on the degree of influence of the occupant in the group to derive the group preference information.

The degree of influence of each occupant in the group is derived by comparing the individual behavior information of the occupant with the group behavior information of the group to derive the degree of similarity of each occupant, and based on a ratio of a degree of similarity of each occupant with respect to a sum of degrees of similarity of all the occupants in the group. A method of deriving the group preference information based on the behavior information shown in FIG. 3 will be described.

A degree of similarity ($\alpha'$) to which the individual behavior information ($\alpha$) of the first occupant is similar to the group behavior information ($\theta$) of the group is derived by the following equation (1).

$$(\alpha') = (\alpha) \cdot (\theta) \qquad (1)$$

The degree of similarity of the second occupant ($\beta'$) and the degree of similarity of the third occupant ($\gamma'$) are derived by an equation similar to the equation (1). In the example of FIG. 3, ($\alpha'$) = 0, ($\beta'$) = 9, and ($\gamma'$) = 25.

Next, the derivation unit 38 derives the degree of influence of each occupant in the group based on the degree of similarity of each occupant by the following equation (2).

$$\text{Degree of influence of the first occupant } (\alpha'') = (\alpha') / ((\alpha') + (\beta') + (\gamma')) \qquad (2)$$

The degree of influence ($\beta''$) of the second occupant and the degree of influence ($\gamma''$) of the third occupant are derived by an equation similar to the equation (2). In the example of FIG. 3, ($\alpha''$) = 0, ($\beta''$) = 0.26, and ($\gamma''$) = 0.74. This indicates that the third occupant has the greatest influence in the group when behaving in a group, followed by the second occupant. The degree of influence of the first occupant is zero, indicating that the preference of the first occupant does not affect the behavior of the group. The degree of influence of each occupant indicates a human relationship in the group. For example, when the third occupant is a child and the first and second occupants are parents, this indicates that the child's preference is likely to be incorporated.

Next, the derivation unit 38 derives the group preference information ($\theta'$) that incorporates the preferences of the occupants based on the degree of influence of each occupant and the individual behavior information by the following equation (3).

$$(\theta') = (\alpha) \times (\alpha'') + (\beta) \times (\beta'') + (\gamma) \times (\gamma'') \qquad (3)$$

As shown in equation (3), the derivation unit 38 multiplies the individual behavior information of the occupant by the degree of influence of the occupant, and sums up the behavior information depending on the degree of influence, thereby obtaining the group preference information ($\theta'$).

In the example of FIG. 3, the group preference information ($\theta'$) is (0, 0, 1.3, 0.8, 3.7, 2.2). Although the group preference information ($\theta'$) is the same as the group behavior information ($\theta$) of the group in that the category of the fifth component is the most preferred, the preferences of the occupants are incorporated in the group preference information ($\theta'$) as shown in the third component and the sixth component. Further, by using the degree of influence of each occupant in the group for derivation, human relationships in the group can be incorporated in the group preference information.

When there is a newly added occupant in the group specified by the group specification unit 34, the degree of influence of the added occupant is unknown. The derivation unit 38 derives the degree of influence of the added occupant based on the degree of influence of the added occupant in another group. For example, suppose a case where a fourth occupant is added to a first group composed of a first occupant to a third occupant. In this case, when the first and fourth occupants belong to a second group and the degree of influence of the fourth occupant is twice as large as that of the first occupant in the second group, the derivation unit 38 may derive the degree of influence of the fourth occupant to be twice as large as that of the first occupant in the first group. That is, the degree of influence of the added occupant in the first group is derived based on the relationship of the degree of influence between the added occupant and the existing occupant in the second group. The derivation unit 38 may use the degree of influence of the added occupant in a third group as it is for the first group. Thus, the degree of influence of the added occupant in the first group can be appropriately derived with reference to the degree of influence of the added occupant in the third group. For example, when the first occupant and the fourth occupant are a married couple or a parent and a child, it is possible to incorporate a marital relationship and a parent-child relationship indicated by the third group.

When the degree of influence of a group's added occupant in another group cannot be acquired, the degree of influence of the added occupant is derived as an average value of the number of group members, for example, 25% when the number of group members is four. In this case, the degree of influence of the existing occupants is reduced by 25%. In this way, even when an occupant is added to the group, the degree of influence of the added occupant can be derived.

The degree of influence of the group's added occupant does not have to be derived as the average value of the number of group members, and may be a predetermined value set in advance, and also may be set to the same value as the degree of influence of one of the existing occupants. For example, the degree of influence of the group's added occupant may be set to one of the minimum value and the maximum value of the degree of influence of the existing occupants based on a predetermined standard. The degree of influence of the existing occupants is reduced in proportion to the degree of influence of the group's added occupant.

The suggestion information storage unit 42 stores suggestion information to which category information is assigned. When the suggestion information is content for providing a guide for a facility, location information and an evaluation score of the facility are added to the suggestion information. A plurality of pieces of category information may be set for one facility.

The determination unit 40 determines the suggestion information to be provided to the occupant based on the group preference information (θ'). The determined suggestion information is transmitted to the in-vehicle terminal device 12 via the server communication unit 28 and provided from the output unit 10 by the output control unit 24.

The determination unit 40 may derive the recommendation level of the suggestion information based on the group preference information (θ'), and may determine to output the suggestion information in descending order of the recommendation level. Based on the example described with reference to FIG. 3, namely, the group preference information (θ') of (0, 0, 1.3, 0.8, 3.7, 2.2), the fifth component is the largest. Thus, the suggestion information belonging to the category of the fifth component is given the highest priority, followed by the suggestion information belonging to the category of the sixth component. In this way, the determination unit 40 can provide appropriate suggestion information based on the group preference information (θ').

The determination unit 40 may extract a similar group having group behavior information or preference information similar to the group preference information (θ') and may determine the suggestion information based on the behavior history of the extracted similar group. Alternatively, the determination unit 40 may extract another occupant having individual behavior information similar to the group preference information (θ') as a similar occupant and may determine the suggestion information based on the behavior history of the extracted similar occupant. The determination unit 40 compares the group preference information (θ') with the group behavior information of other groups to extract a group of the other groups having a degree of similarity of a predetermined value or more as a similar group, and determines to output information of a facility that has been visited by the extracted similar group as the suggestion information. The determination unit 40 may derive the degree of similarity between the groups using a Pearson correlation method. Thereby, a facility that has been visited in the past by the group having group behavior information or preference information similar to the group preference information (θ') can be suggested to the occupant. A determination can be made for a similar occupant in the same manner as in the case of a similar group. When extracting another similar group, the determination unit 40 may limit a behavior region of the other group based on a region designated when the occupant searched for a restaurant and extract the similar group. The behavior region of the other group can be derived based on the behavior history information.

The determination unit 40 may derive a degree of recommendation of a facility that the group has not visited with a recommendation method using visit information of the other group, such as collaborative filtering, based on the behavior information on the other similar occupant or the other similar group, or preference information of the other group. The determination unit 40 determines to derive the degree of similarity of the group behavior information of the other occupant or the other group with respect to the group preference information, to derive a possibility of the group to visit the facility by the following equation (4), and to output information on a facility that is highly likely to be visited by the group. Alternatively, the determination unit 40 determines to derive the similarity of the preference information of the other group with respect to the group preference information, to derive the possibility of the group to visit the facility by the following equation (4), and to output information on the facility that is highly likely to be visited by the group. That is, the determination unit 40 derives the possibility of the group to visit a facility that has not been visited by the group based on the behavior information of the other occupant or the other group similar to the group preference information, and outputs suggestion information based on the possibility of visits.

$$r'_{u,\,y} = (\Sigma j \in Y_u S_{y,\,j} r_{u,\,j}) \,/\, (\Sigma j \in Y_u |S_{y,\,j}|) \qquad (4)$$

In equation (4), $r'_{u,\,y}$ indicates the possibility of a group u to visit a facility y, $S_{y,\,j}$ indicates the degree of similarity between the facility y and a facility j, $Y_u$ indicates the set of facilities that the group u has already visited, and $r_{u,\,j}$ indicates an evaluation of the facility j, which is made by the group u. Thereby, it is possible to provide information on the facility that is highly likely to be visited by the group, based on the behavior information of the other occupant and the other group.

When determining the suggestion information, the determination unit 40 may use at least one of the vehicle position information, the location information of the facility included in the suggestion information, and the evaluation score of the facility included in the suggestion information in addition to the group preference information ($\theta$'). The determination unit 40 may derive the degree of recommendation such that the closer the position of the vehicle and the location of the facility are, the higher the degree of recommendation is, and the higher the evaluation score of the facility is, the higher the degree of recommendation is. This makes it possible to output useful suggestion information based on the positional relationship with the facility and the evaluation of the facility itself.

A plurality of categories may be assigned to the suggestion information, for example, the categories of "ramen noodles" and "curry" may be set to the facility. Here, if a group with a higher preference for "ramen noodles" than "curry" searches for a facility for "curry," the degree of recommendation derived based on "ramen noodles" is higher than the degree of recommendation derived based on "curry." At this time, the determination unit 40 may derive the degree of recommendation based on "curry" or may derive the degree of recommendation based on "ramen noodles." That is, the determination unit 40 may derive the degree of recommendation based on the same category as a search word among the categories set in the suggestion information, or may derive the degree of recommendation based on a category different from the search word among the categories set in the suggestion information. In addition, the determination unit 40 may derive the degree of recommendation based on each of the categories set in the suggestion information, and set the highest degree of recommendation as the degree of recommendation of the suggestion information.

The determination unit 40 may use the degree of recommendation derived based on the category different from the search word among the categories set in the suggestion information to correct the degree of recommendation derived based on the search word. For example, if a group that searches for "curry" has a high preference for "ramen noodles", the degree of recommendation of the suggestion information set with the categories of "curry" and "ramen noodles" is corrected to be higher than the degree of recommendation derived based on "curry."

When deriving the degree of recommendation of the suggestion information, the determination unit 40 may normalize each component of the group preference information by a known method, and derive the degree of recommendation based on the normalized group preference information. Thereby, in the behavior information generated by a small number of visits, it is possible to suppress a large difference in the degree of recommendation with a small difference in the number of visits.

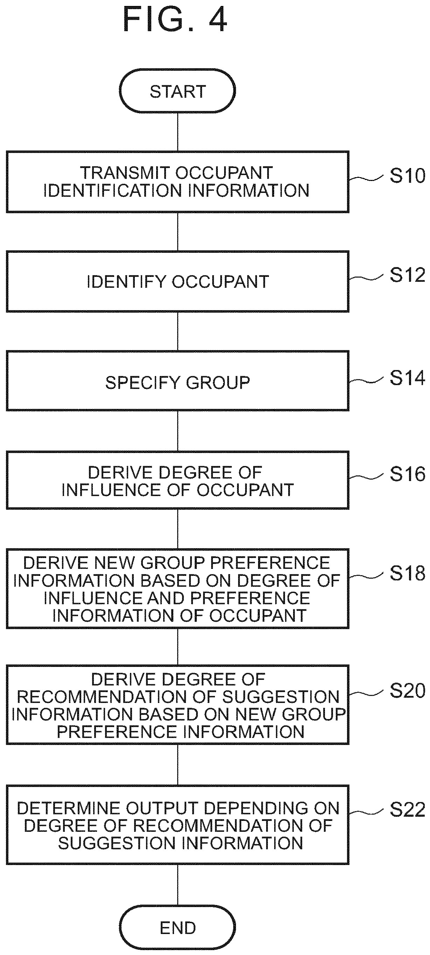

FIG. 4 is a flowchart showing a process for determining the output of the suggestion information. The identification information detection unit 20 of the in-vehicle terminal device 12 detects the identification information of the occupants and transmits the detected identification information to the server device 14 via the in-vehicle communication unit 26 (S10).

The identification information acquisition unit 30 acquires the identification information of the occupants, and the occupant identification unit 32 identifies each of the occupants based on the identification information (S12). The group specification unit 34 specifies the group composed of the occupants based on the identification results of the occupants (S14).

The derivation unit 38 derives the degree of influence of the occupants in the group by comparing the group behavior information of the group and the individual behavior information of the occupants (S16). The derivation unit 38 derives the group preference information based on the derived degree of influence of each occupant and the preference information of each occupant (S18).

The determination unit 40 derives the degree of recommendation of the suggestion information based on the group preference information (S20), and determines to output the suggestion information in descending order of the degree of recommendation (S22). The determination unit 40 may determine the output of the suggestion information in response to a request for information provision by the occupant, for example, a search for a facility, or may determine the output of the suggestion information in response to a conversation of the occupants.

The invention has been described above based on the embodiments. The embodiments are merely illustrative, and those skilled in the art will understand that various modifications can be made to a combination of the components and a combination of the processes and that such modifications fall within the scope of the invention.

For example, the individual behavior information of the occupant may include information indicating whether the occupant smokes, and the determination unit 40 may preferentially cause information on facilities where smoking is allowed to be output for smokers.

Further, at the time of the search request by the occupant, budget information input by the occupant may be transmitted to the server device 14, and the determination unit 40 may cause the facility information to be output depending on the budget.

**Claims**

1. An information determination device comprising:

   an occupant identification unit (32) configured to identify a plurality of occupants in a vehicle;
   a group specification unit (34) configured to specify, based on an identification result of the occupants, a group composed of the occupants;
   a storage unit (36) configured to store group behavior information of the group and individual behavior information of the occupants;
   a derivation unit (38) configured to derive group preference information based on the individual behavior information of the occupants identified by the occupant identification unit and the group behavior information of the group composed by the occupants; and
   a determination unit (40) configured to determine, based on the group preference information that is derived, suggestion information to be provided to the occupants.

2. The information determination device according to claim 1, wherein:

   the storage unit (36) is configured to store group configuration information in which identification information of the occupants is associated with identification information of the group; and
   the group specification unit (34) is configured to include, in the group, an occupant that is not included in the group configuration information when a predetermined adding condition is satisfied.

3. The information determination device according to claim 1 or 2, wherein the derivation unit (38) is configured to derive a degree of influence of each occupant in the group by comparing the group behavior information and the individual behavior information, and derive the group preference information based on the degree of influence of each occupant that is derived and individual behavior information of each occupant, and when the group specification unit (34) includes, in the group, another occupant that is not included in group configuration information, derive a degree of influence of the other occupant based on the degree of influence of the other occupant in another group.

4. The information determination device according to any one of claims 1 to 3, wherein the storage unit (36) is configured to store the group behavior information when behaving in a group and individual behavior information of an occupant, the individual behavior information not including behavior information when behaving in a group.

5. The information determination device according to any one of claims 1 to 4, wherein the determination unit (40) is configured to extract a similar group having the group behavior information or preference information similar to the group preference information that is derived and determine the suggestion information based on the group behavior information of the similar group that is extracted.

6. An information determination method comprising:

   identifying a plurality of occupants in a vehicle;
   specifying, based on an identification result of the occupants, a group composed of the occupants;
   storing group behavior information of the group and individual behavior information of the occupants;
   deriving group preference information based on the individual behavior information of the occupants who are identified and the group behavior information of the group composed of the occupants; and
   determining, based on the group preference information that is derived, suggestion information to be provided to the occupants.

# FIG. 1

10

RECOMMENDATIONS

| | NAME OF SHOP | TRAVEL TIME | DEGREE OF RECOMMENDATION |
|---|---|---|---|
| 1 | SOBA NOODLE SHOP A | 10 MINUTES | 90 |
| 2 | SOBA NOODLE SHOP B | 20 MINUTES | 85 |
| 3 | RAMEN NOODLE SHOP C | 15 MINUTES | 80 |
| 4 | . . . | . . . | . . . |
| 5 | . . . | . . . | . . . |
| | | | |

# FIG. 2

**IN-VEHICLE TERMINAL DEVICE** 12

- IDENTIFICATION INFORMATION DETECTION UNIT 20
- POSITION ACQUISITION UNIT 22
- OUTPUT CONTROL UNIT 24
- INPUT UNIT 21
- IN-VEHICLE COMMUNICATION UNIT 26

OUTPUT UNIT 10

**SERVER DEVICE** 14

- STORAGE UNIT 36
  - OCCUPANT AUTHENTICATION INFORMATION
  - OCCUPANT PREFERENCE INFORMATION
  - GROUP CONFIGURATION INFORMATION
  - GROUP PREFERENCE INFORMATION
  - BEHAVIOR HISTORY INFORMATION
- SERVER COMMUNICATION UNIT 28
- IDENTIFICATION INFORMATION ACQUISITION UNIT 30
- OCCUPANT IDENTIFICATION UNIT 32
- GROUP SPECIFICATION UNIT 34
- DERIVATION UNIT 38
- DETERMINATION UNIT 40
- SUGGESTION INFORMATION STORAGE UNIT 42

EP 3 764 306 A1

# FIG. 3

|  | BEHAVIOR INFORMATION | REPLACEMENT |
|---|---|---|
| FIRST OCCUPANT | (5, 3, 0, 0, 0, 0) | $\alpha$ |
| SECOND OCCUPANT | (0, 0, 5, 3, 0, 0) | $\beta$ |
| THIRD OCCUPANT | (0, 0, 0, 0, 5, 3) | $\gamma$ |
| GROUP | (0, 0, 0, 3, 5, 0) | $\theta$ |

# FIG. 4

START

TRANSMIT OCCUPANT
IDENTIFICATION INFORMATION — S10

IDENTIFY OCCUPANT — S12

SPECIFY GROUP — S14

DERIVE DEGREE OF
INFLUENCE OF OCCUPANT — S16

DERIVE NEW GROUP PREFERENCE
INFORMATION BASED ON DEGREE OF
INFLUENCE AND PREFERENCE
INFORMATION OF OCCUPANT — S18

DERIVE DEGREE OF
RECOMMENDATION OF SUGGESTION
INFORMATION BASED ON NEW GROUP
PREFERENCE INFORMATION — S20

DETERMINE OUTPUT DEPENDING ON
DEGREE OF RECOMMENDATION OF
SUGGESTION INFORMATION — S22

END

Europäisches
Patentamt

European
Patent Office

Office européen
des brevets

## EUROPEAN SEARCH REPORT

Application Number

EP 20 17 1514

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/037446 A1 (MITSUBISHI ELECTRIC CORP [JP]) 1 March 2018 (2018-03-01) * the whole document * ----- | 1-6 | INV. G06Q30/06 |
| X | JP 2009 250811 A (TOYOTA MOTOR CORP) 29 October 2009 (2009-10-29) * the whole document * ----- | 1-6 | |
| X | WO 2019/097956 A1 (HONDA MOTOR CO LTD [JP]) 23 May 2019 (2019-05-23) * the whole document * ----- | 1-6 | |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 24 June 2020 | Lutz, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..........................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 17 1514

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2020

| Patent document cited in search report | Publication date | Patent family member(s) | Publication date |
|---|---|---|---|
| WO 2018037446 A1 | 01-03-2018 | CN 109564102 A<br>DE 112016007163 T5<br>JP 6656384 B2<br>JP WO2018037446 A1<br>US 2019311014 A1<br>WO 2018037446 A1 | 02-04-2019<br>09-05-2019<br>04-03-2020<br>22-11-2018<br>10-10-2019<br>01-03-2018 |
| JP 2009250811 A | 29-10-2009 | NONE | |
| WO 2019097956 A1 | 23-05-2019 | NONE | |

EPO FORM P0459

For more details about this annex : see Official Journal of the European Patent Office, No. 12/82

**EP 3 764 306 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013131009 A